# EUROPEAN PATENT APPLICATION

(11) **EP 4 451 394 A1**
(43) Date of publication of application: **23.10.2024**
(21) Application number: 23000065.5
(22) Date of filing: 18.04.2023
(51) Int. Cl.: H01M 8/2475, B32B 1/02, H01M 10/48, H01M 50/202, H01M 50/204, H01M 50/24, H01M 50/271, H01M 50/30

(54) **ENERGY STORAGE CONTAINER**

(71) Applicant: Rolls-Royce Solutions GmbH, 88045 Friedrichshafen (DE)
(72) Inventor: STURKENBOOM, Leon, 1091 EP Amsterdam (NL); FRIEDRICH, Jesse, 12103 Berlin (DE); URBAN, Nicolas, 12051 Berlin (DE); ZAGRODNIK, Michael Adam, 358665 Singapore (SG); MATHIVANAN, Anand Prabhu, 760626 Singapore (SG); VAIDYA, Rushabh Pradipbhai, 10555 Berlin (DE); BERG, Stefan, 10318 Berlin (DE)
(74) Representative: Le Quesne Gottschalk, Ernesto Kurt

(57) **Abstract**

Energy storage container (1) in which at least one energy storage device (8) is arranged, including at least one housing wall (2) and one upper covering (3), wherein the upper covering (3) includes at least one roof flap (4), wherein the housing wall (2) and the upper covering (3) are reinforced to withstand an explosion pressure (P_{E}) inside the energy storage container (1), wherein the roof flap (4) is lockable with a lock (5) and the lock (5) is arranged at an upper end of the housing wall (2), wherein the lock (5) is configured to partially break and release the roof flap (4) when a predetermined pressure (P₁) inside the energy storage container (1) is reached or exceeded, wherein the predetermined pressure (P₁) is lower than the explosion pressure (P_{E}), a sensing system (6) configured to measure at least one parameter (S) related to a technical failure in the container (1), and a control unit (7) configured to receive a parameter value (V) measured by the sensing system (6),wherein the control unit (7) is further configured to compare the measured value (V) with a predetermined value (V_{P}) and to unlock the lock (5).

## Description

The present invention relates to an improved energy storage container according to the independent claim 1.

Energy storage containers include a container housing in which energy storage elements are arranged and, for example, a container door which makes the container housing accessible for the purpose of maintenance and/or repair. In this manner, the energy storage elements arranged in the container housing can be repaired or substituted by comparable elements. An energy storage element can for instance be a module or pack containing battery cells or a fuel cell stack with a hydrogen storage tank.

The containers of the type mentioned herein can be transported to a specific place where they are electrically connected. They can be discharged and provide electrical and/or thermal energy stored in the container for example to consumers. They also can be connected to a power grid and be charged and store energy to be supplied later using the one or more energy storage elements arranged in the container.

An energy storage container can be operated to supply electrical and/or thermal energy in different places when it includes the safety functions required for a certain mission profile. The safety functions mentioned in this respect avoid that people or material is damaged due to a technical failure in the container. A technical failure within battery or fuel cell systems may lead to a creation of explosive and/or toxic gases. Explosive gases should be released in case of explosion or fire risk, but toxic gases should be avoided to be directly released if toxic hazardous levels could be reached. For example, a container of the mentioned kind can be serviced by technicians, or it can be used within a crowd of people when it features the required safety mechanisms to protect the people close to it from being damaged by the container or elements arranged in the container.

The objective of the present invention is to provide an energy storage container with improved safety features which enable a safe energy supply and/or storage operation in an increased number of applications.

The objective is solved by the features of the independent claim 1.

An energy storage container is a container, in which at least one energy storage device is arranged. An energy storage device is configured to supply energy to a consumer connected to it and/or to be charged by power supplied by an energy grid to which it is connected. The energy grid can be replaced or supplemented by any power generation device.

The container includes at least one housing wall and one upper covering. The upper covering has preferably the function of a roof but cannot be opened because it is mechanically fixed to the housing wall structure of the container. The upper covering includes at least one roof flap. The roof flap enables to partially open the part of the upper covering on which it is arranged.

The roof flap is lockable using a lock. The lock is arranged at an upper end of the housing wall. Preferably, the lock is arranged at an upper end of an outer surface of the housing wall.

The lock is configured to partially break and release the roof flap when a predetermined pressure inside the container is reached or exceeded due to an explosion.

When the lock partially breaks because of a predetermined pressure in the container, a part of its mechanical structure is overcome and releases the roof flap. Once the roof flap is released, it is no longer locked and can be opened.

The housing wall and the upper covering are reinforced to withstand an explosion pressure inside the container and, therefore, to withstand the overall pressure build up that could occur due to an explosion within the container. Thereby an explosion that occurs within the container is channeled upwards via the roof flap, instead of going via the side. This prevents people nearby of getting hurt due to the explosion coming from the energy storage system.

Further, the container includes a sensing system configured to measure a parameter related to a technical failure in the container. A parameter related to a technical failure is a physical size that can be quantitively measured, e.g., a pressure, temperature, or concentration of gases in the container. Measuring a certain value of the physical size indicates a technical failure or an abnormality in the operation of the energy storage container.

Furthermore, the container includes a control unit configured to receive a parameter value measured by the sensing system. The control unit is further configured to compare the measured value of the parameter related to a technical failure in the container with a predetermined value and to unlock the lock when the measured value reaches or exceeds the predetermined value. The predetermined value can be defined as a single threshold value, or as a value range defined by a maximum value and a minimum value.

The combination of sensing system and a control unit for automatically releasing the roof flap at a predetermined value of a parameter with a predetermined mechanical breakpoint due to a predetermined pressure increases the safety of the energy storage container. This combined safety mechanism enables a controlled, slow and safe canalization of explosive and toxic gases through the open roof flap from the container even if the sensing system and control unit fail to release the roof flap in consequence of a dangerous gas leak from one or more energy storage devices within the energy storage container. By a controlled release of gases any creation of turbulence that might trigger explosion is avoided. By a delayed release of toxic gases the risk of toxification of people or other living creatures nearby is reduced.

The solution above may be further improved by adding one or more of the following optional features. Each optional feature is advantageous on its own and may be combined independently with any other optional feature.

According to one possible embodiment of the container, the roof flap includes a roof pin configured to hold the roof flap in a closed position hacking in the lock. The pin can be placed in different parts of the roof flap and enables different advantageous positions for the corresponding lock.

Advantageously, the lock includes a lock housing and a locking element configured to be overcome by the roof pin when a predetermined pressure inside the container is reached or exceeded. A housing and a locking element enable a modular design and the option to mount the lock at different parts of the container.

According to another possible embodiment of the container, the lock includes a wire and is configured to receive via the wire a release signal to release the locking element. Advantageously, the lock includes a wire and is configured to receive via the wire a release signal from the control unit to release the locking element. Thereby, the lock can be configured to release electronically the roof flap via a release signal from the control unit.

In an optional embodiment, the container includes a spring to preload the roof flap outwards of the container, wherein the spring is arranged at the upper end of the housing wall and includes a slider attached to the wall and a heat resistant compression spring arranged between the slider and the roof flap. Advantageously, the container includes a spring to preload the roof flap outwards of the container, wherein the spring is arranged at the upper end on the inner surface of the housing wall and includes a slider attached to the wall and a heat resistant compression spring arranged between the slider and the roof flap. Therefore, the spring may directly open the roof flap once it is unlocked and enables a safe gas release through the upper cover of the container.

Optionally, the container may include a second roof flap configured to be locked by a second lock, wherein the second lock is configured to be unlocked by the control unit via the release signal and is further configured to partially break and release the second roof flap when a predetermined pressure inside the container is reached or exceeded. This configuration provides further redundancy and increases the safety of the energy storage container. This configuration is damage tolerant to possible failures in one of the roof flaps.

Preferably, the locks are arranged at an upper end of an outer surface of the housing wall. Thus, the locks may not be affected by a condition of high pressure or temperature within the container.

According to a further optional embodiment, the sensor system includes a detector, a second detector and a third detector connected to the control unit, wherein the control unit is configured to compare the value measured by the detector with a threshold value, the value measured by the second detector with a second threshold value and the value measured by the third detector with a third threshold value. This configuration of the sensor system enabled the surveillance of different parameters comparing them with different threshold values. Preferably, the sensor system includes a gas concentration detector, a smoke detector and a temperature detector, wherein the control unit is configured to compare the value measured by the gas concentration detector with a concentration threshold, the value measured by the smoke detector with a smoke threshold and the value measured by the temperature detector with a temperature threshold. The smoke detector can be a camera and the smoke threshold can be a saved image related to a predetermined smoke density. This configuration enables to increase the safety of the container, because the detectability of a possible technical failure in the container is increased sensing different parameters which indicate a technical failure within the container.

In yet another optional embodiment, the energy storage device is configured to provide the stored energy in form of electric power, wherein the container is configured to provide the electric power via an electrical container interface. Preferably, the at least one energy storage device is arranged in a room of the container and is configured to provide the stored energy in form of electric power, wherein the container is configured to provide the electric power via the electrical container interface. In another optional embodiment, a second energy storage device, apart from the energy storage device is installed isolated and separated from the energy storage device in another room and configured to provide the stored energy in form of electric power as a back-up in case the main power supply from the grid fails, wherein the container is configured to provide the electric power via an electrical container interface.

The energy storage container is meant to allow a plug and play operation of the container and therefore reduces the time necessary to connect the container to a consumer and/or a power grid. Most safety systems in the form of explosion or deflagration panels do not allow transportation while assembled and installed. The current invention allows transportation, enabling plug and play container energy storage systems.

According to another possible embodiment of the energy storage container, the control unit is configured to stop the operation of the container by sending a disabling signal to the electrical container interface when at least one threshold value is exceeded by the measured value of the detector. Advantageously, the control unit is configured to stop the operation of the container by sending a disabling signal to the electrical container interface when at least one of the three threshold values is exceeded by the measured value of the corresponding detector. This enables a safe state transition from an active operation to a standby mode as soon as a technical failure in the container is indicated.

Optionally, the container may include a fire suppression device configured to dispense a substance for avoiding or suppressing fire. Once dispensed, the substance suppresses the fire and a possibility of explosion, which allows the thermal runaway to occur in a controlled way and increases the safety of the container.

Preferably, the container includes a fire suppression device configured to dispense a substance for avoiding and/or suppressing fire, wherein the control unit is configured to start the operation of the fire suppression device by generating an activation signal when at least two of the threshold values are exceeded by the corresponding detector values. The control unit is preferably configured to stop the operation of the energy storage container by sending a disabling signal to the electrical container interface when at least one threshold value is exceeded by the measured value of the detector and, in parallel, to start the operation of the fire suppression device by generating an activation signal when at least one of the threshold values are exceeded by the corresponding detector values. More preferably, the energy storage container may include a fire suppression device configured to dispense a substance for avoiding and/or suppressing fire, wherein the control unit is configured to start the operation of the fire suppression device and in parallel generating a second activation signal as soon as at least two of the three threshold values are exceeded by the corresponding detector values. Implementing a control unit to a registration of more than one detector signals and multi-step activation can reduce the likelihood of a faulty triggering and an unnecessary loss of the container.

According to another possible embodiment of the energy storage container, the control unit includes a timer and is configured to send the release signal to the locks with a time delay, wherein the time delay is programmable using the timer. Preferably, the control unit includes a timer and is configured to send the release signal to the locks with a time delay and when all detector values are below their corresponding threshold values, wherein the time delay is programmable using the timer. Typically, a thermal runaway of explosive gases occurs within a certain time, for example one hour. After this time, and in case the temperature is below acceptable threshold within the enclosure, the flaps are preferably opened to release the explosive gases together with the neutralizing agent. This increases the safety of the container avoiding that toxic gases are released too early from the container and allowing to warn people nearby to evacuate. In addition, when the flap remains closed the substance for avoiding and/or suppressing fire is more effective in suppressing the fire within a closed system.

In the following, exemplary embodiments of the invention are described with reference to the drawings. In the drawings, elements that correspond to each other with respect to function and/or structure have been provided with the same reference numeral.
Fig. 1 shows a schematic representation of an energy storage container according to one possible embodiment of the present disclosure;
Fig. 2 shows a schematic representation of a lock arranged in an energy storage container according to the present disclosure;
Fig. 3 shows a schematic representation of an energy storage container according to a further possible embodiment of the present disclosure;
Fig. 4a shows a representation of a closed spring which can be used in an energy storage container according to the present disclosure;
Fig. 4b shows a representation of an open spring which can be used in an energy storage container according to the present disclosure;
Fig. 5 shows a schematic representation of an energy storage container according to a further possible embodiment of the present disclosure.

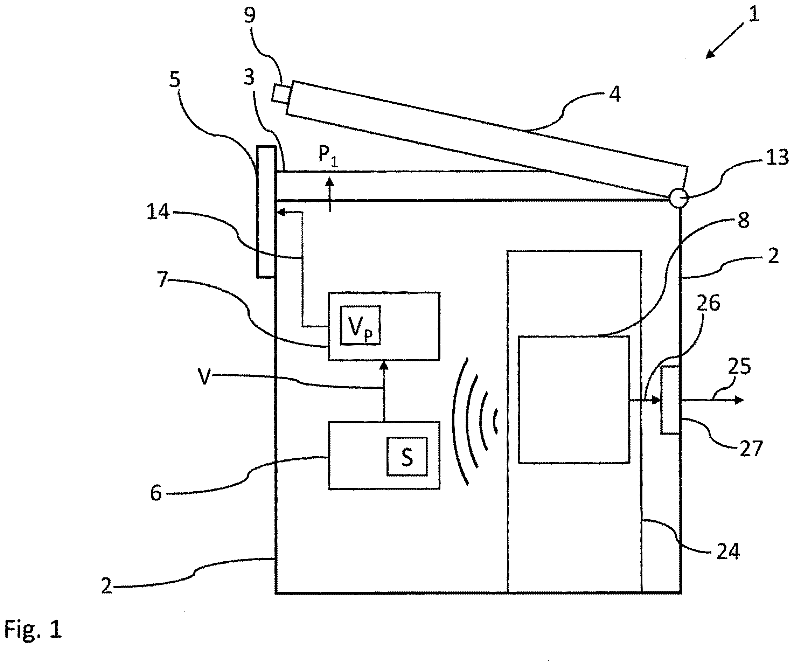

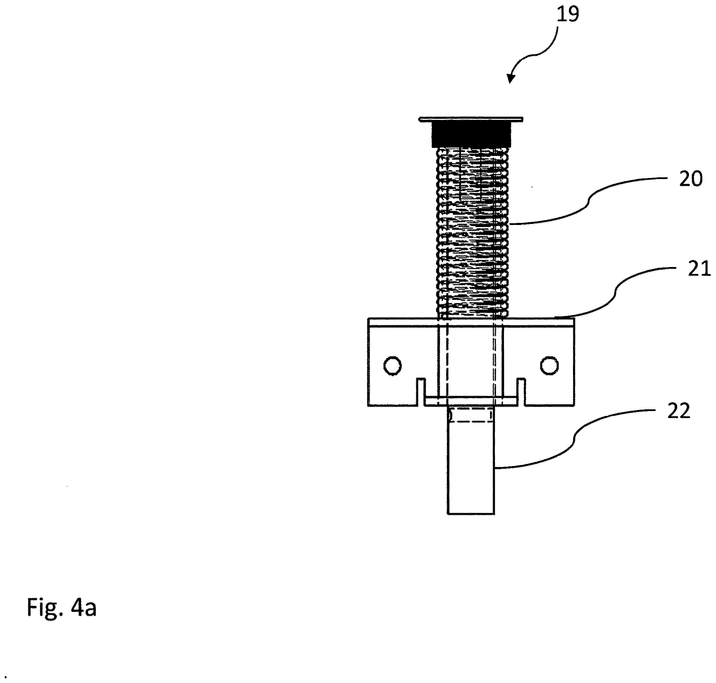

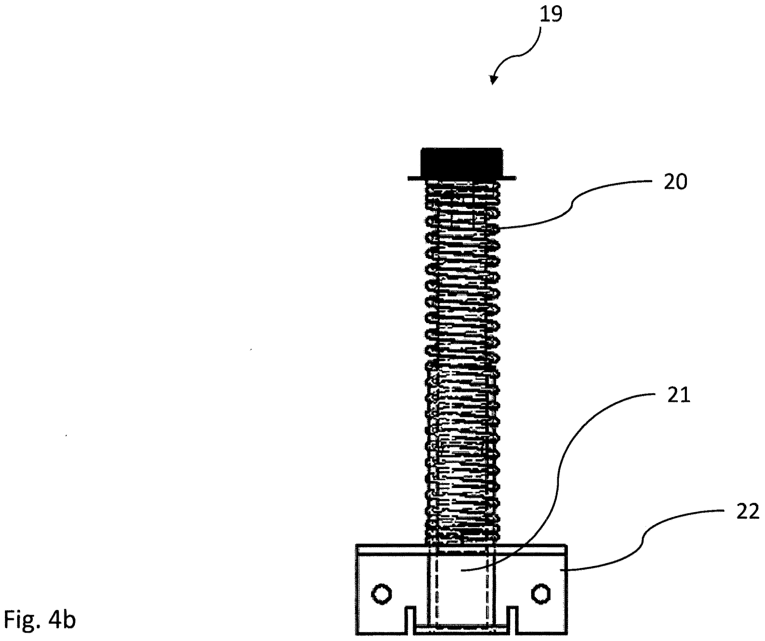

In the following, the structure of possible embodiments of an energy storage container 1 according to the present invention is explained with reference to the exemplary embodiments shown in Figs. 1, 2, 3 and 5. Further, Fig. 4a and 4b are used for explaining the function of a spring 19 which can be advantageously used in an optional embodiment of the energy storage container 1.

Fig. 1 shows an exemplary block diagram of the energy storage container 1 according to one possible embodiment of the present invention. In the container 1 is at least one energy storage device 8 arranged. The energy storage device may be fastened to a rack 24 fixed to an inner surface of the container 1.

The energy storage container 1 includes at least one housing wall 2 and an upper covering 3, wherein the upper covering 3 includes at least one roof flap 4. The roof flap 4 enables to open at least partially the part of the upper covering 3 on which it is arranged. The housing wall 2 and the upper covering 3 are reinforced to withstand an explosion pressure P_{E} inside the container 1.

A lock 5 is arranged at an upper end of the housing wall 2. The roof flap 4 is lockable using the lock 5. As shown in Fig. 1, the lock 5 may be arranged at an upper end of an outer surface of the housing wall 2.

The lock 5 is configured to partially break and release the roof flap 4 when a predetermined pressure P₁ inside the container is reached or exceeded. The predetermined pressure P₁ is lower than the explosion pressure P_{E}.

When the lock 5 partially breaks because of a predetermined pressure P1 in the container, a part of its mechanical structure is overcome and releases the roof flap 4. Once the roof flap 4 is released, it is no longer locked and can be opened.

Further, the container includes a sensing system 6 configured to measure a parameter S related to a technical failure in the energy storage container 1. The parameter S related to a technical failure is a physical size that can be quantitively measured, e.g., a pressure, temperature, or concentration of a certain gaseous or liquid fluid in the container. Measuring a certain value of the physical size indicates a technical failure or an abnormality in the operation of the energy storage container 1.

Furthermore, the energy storage container 1 includes a control unit 7 configured to receive a parameter value V measured by the sensing system 6. The control unit 7 is further configured to compare the measured value V of the parameter S related to a technical failure in the energy storage container 1 with a predetermined value V_{P} and to unlock the lock 5 when the measured value V reaches or exceeds the predetermined value V_{P}.

The combination of a sensing system 6 and a control unit 7 for automatically releasing the roof flap 4 at a predetermined value V_{P} of a parameter S with a predetermined mechanical breakpoint due to a predetermined pressure P1 increases the safety of the energy storage container 1. This combined safety mechanism enables a controlled and safe canalization of explosive fluids through the open roof flap from the container even if the sensing system and control unit fail to release the roof flap, for example in consequence of a dangerous gas leak from one or more energy storage devices 8 within the energy storage container 1.

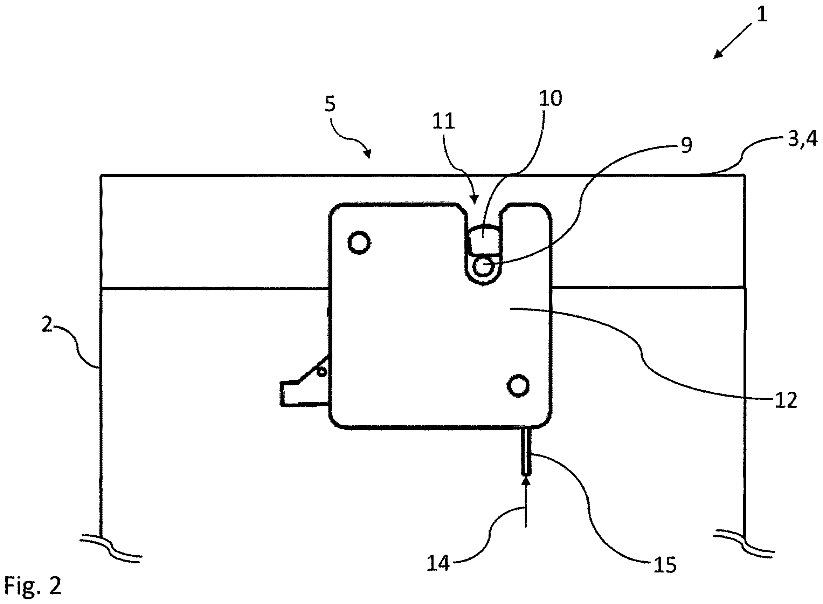

As shown in Figs. 1 and 2, the roof flap 4 may include a roof pin 9 configured to hold the roof flap 4 in a closed position hacking in the lock 5. The roof pin 9 can be placed in different parts of the roof flap 4 and enables different advantageous positions for the corresponding lock 5 along the upper end of the housing wall 2.

As shown in Fig. 2, the lock 5 may include a lock housing 12 and a locking element 10 configured to be overcome by the roof pin 9 when a predetermined pressure P1 inside the energy storage container 1 is reached or exceeded. A housing 12 and a locking element 10 enable a modular design and the option to mount the lock 5 at different parts along the upper end of the energy storage container 1. A modular design is decisive when assessing the safe reaction of systems as soon as technical failures or abnormalities are detected.

The lock 5 may include a wire 15 and may be configured to receive via the wire 15 a release signal 14 to release the locking element 10 and, therefore, to release the roof flap 4. Advantageously, the lock 5 may include a wire 15 and may be configured to receive via the wire 15 a release signal 16 from the control unit 7 to release the locking element 10 and, therefore, to release the roof flap 4. Thereby, the lock 5 can be configured to release electronically the roof flap 4 via a release signal 14 from the control unit 7.

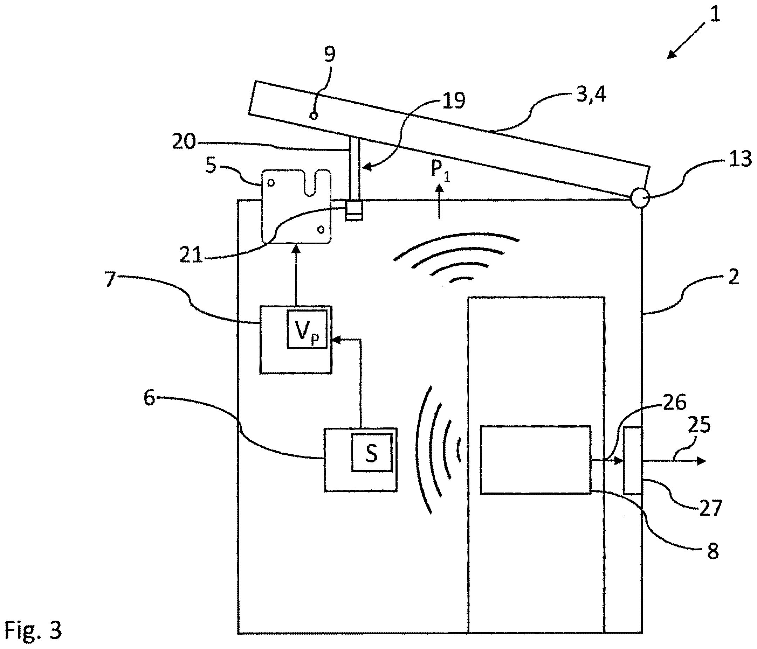

As shown in Fig. 3, when the lock 5 partially breaks because of a predetermined pressure P1 in the container, a part of its mechanical structure, for example the locking element 10, is overcome and releases the roof flap 4.

Fig. 4a shows a spring 19 in a closed position and Fig. 4b shows a spring 19 in an open position. The energy storage container 1 may include a spring 19 to preload the roof flap 4 outwards of the energy storage container 1, wherein the spring 19 is arranged at the upper end of the housing wall 2 using a slider bearing 21. The spring 19 may include a slider 22 attached to the wall and a heat resistant compression spring element 20 arranged between the slider 22 and the roof flap 4. Advantageously, the container may include a spring 19 to preload the roof flap 4 outwards of the energy storage container 1, wherein the spring 19 is arranged at the upper end on the inner surface of the housing wall 2 and includes a slider 22 attached to the housing wall 2 and a heat resistant compression spring element 20 arranged between the slider 22 and the roof flap 4. Therefore, the spring 19 may open the roof flap 4 once it is unlocked and enables a safe gas release through the upper cover of the container.

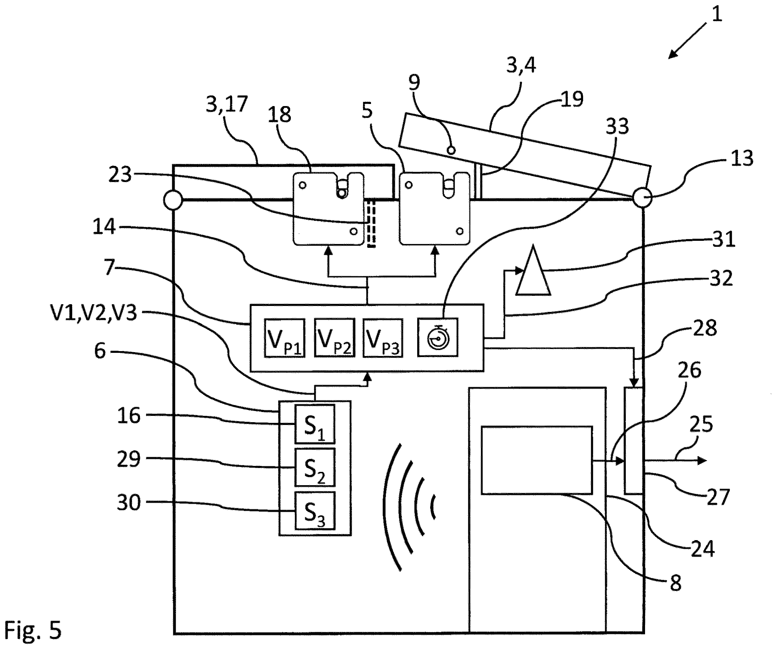

As shown in Fig. 5, the energy storage container 1 may include a second roof flap 17 configured to be locked by a second lock 18, wherein the second lock 18 is configured to be unlocked by the control unit 7 via the release signal 14 and is further configured to partially break and release the second roof flap 17 when a predetermined pressure P₁ inside the energy storage container 1 is reached or exceeded. This configuration provides further redundancy and increases the safety of the energy storage container 1. This configuration is damage tolerant to possible failures in one of the roof flaps 4, 17. The energy storage container 1 may advantageously also have one control unit for every roof flap 4,17 (not shown).

Preferably, the locks 5,18 may be arranged at an upper end of an outer surface of the housing wall 2. Thus, the locks 5,18 may not be affected by a condition of high pressure or temperature within the energy storage container 1.

As shown in Fig. 5, the sensor system 6 may include a detector 16, a second detector 29 and a third detector 30 connected to the control unit 7, wherein the control unit 7 is configured to compare the value V₁ measured by the detector 16 with a threshold value V_{P1}, the value V₂ measured by the second detector 29 with a second threshold value V_{P2} and the value measured V₃ by the third detector 30 with a third threshold value V_{P3}. This configuration of the sensor system 6 enables the surveillance of different parameters S₁, S₂, S₃ comparing them with different threshold values. Preferably, the sensor system 6 detector 16 may be a gas concentration detector. The second detector 29 may be a smoke detector and the third detector 30 may be a temperature detector, wherein the control unit 7 is configured to compare the value V₁ measured by the gas concentration detector 16 with a concentration threshold V_{P1}, the value V₂ measured by the smoke detector 29 with a smoke density value threshold V_{P2} and the value V₃ measured by the temperature detector 30 with a temperature threshold V_{P3}. This configuration enables to increase the safety of the energy storage container 1, because the detectability of a possible technical failure is increased sensing different parameters S₁, S₂, S₃ which indicate a technical failure or at least an abnormality within the energy storage container 1.

As shown in Figs. 1, 2, 3 and 5, the energy storage device 8 may be configured to generate a device output 26 in form of electric power, wherein the energy storage container 1 is configured to provide the electric power via an electrical container interface 27. Preferably, the at least one energy storage device 8 is arranged in the energy storage container 1 is configured to generate a device output 26 in form of electric power, wherein the energy storage container 1 includes an electrical interface 27 and is further configured to provide the electric power via the electrical container interface 27. This configuration of the energy storage container 1 enables a plug and play energy supply and charge operation because it reduces the time necessary to connect the container to a consumer and/or a power grid to a minimum.

As shown in Fig. 5, the control unit 7 may be configured to stop the operation of the energy storage container 1 by sending a disabling signal 28 to the electrical container interface 27 when at least one threshold value V_{P1}, V_{P2}, V_{P3} is exceeded by a measured value of one of the detectors 16, 29, 30. Advantageously, the control unit 7 is configured to stop the operation of the energy storage container 1 by sending a disabling signal 28 to the electrical container interface 27 when at least one of the three threshold values V_{P1}, V_{P2}, V_{P3} is exceeded by the measured value of the corresponding detector 16, 29, 30 which it is compared with. This enables a safe state transition from an active operation to a standby mode as soon one of the detectors 16, 29, 30 indicates a technical failure in the energy storage container 1.

The energy storage container 1 may include a fire suppression device 31 configured to dispense a substance for avoiding fire. Once dispensed, the substance avoids or suppresses the fire and a possibility of explosion, which allows the thermal runaway to occur in a controlled way and increases the safety of the energy storage container 1.

Preferably, the energy storage container 1 may include a fire suppression device 31 configured to dispense a substance for avoiding fire, wherein the control unit 7 is configured to start the operation of the fire suppression device 31 by generating an activation signal 31 when at least two of the threshold values V_{P1}, V_{P2}, V_{P3} are exceeded by the corresponding detector values V₁, V₂, V₃. More preferably, the energy storage container 1 may include a fire suppression device 31 configured to dispense a substance for avoiding fire, wherein the control unit 7 is configured to start the operation of the fire suppression device 31 by generating an activation signal 32 as soon as at least two of the three threshold values V_{P1}, V_{P2}, V_{P3} are exceeded by the corresponding detector values V₁, V₂, V₃. This increases the safety of the energy storage container 1 enabling an automatic reaction of the control unit 7 to a registration of more than one detector signal indicating a technical failure within the container.

The control unit 7 may include a timer 33 and may be configured to send the release signal 14 to the locks 5,17 with a time delay, wherein the time delay is programmable and implementable using the timer 33. Preferably, the control unit 7 includes a timer 33 and is configured to send the release signal 14 to the locks with a time delay and when all detector values V₁, V₂, V₃ are below their corresponding threshold values V_{P1}, V_{P2}, V_{P3}, wherein the time delay is programmable using the timer 33. Typically, a thermal runaway of explosive gases occurs within a certain time, for example one hour. After this time, and for example in case the temperature is below the acceptable threshold V_{P3} within the energy storage container 1, the roof flaps 4 are preferably opened to release the explosive gases together with the substance for avoiding fire or neutralizing agent. This increases the safety of the energy storage container 1 avoiding that explosive gases are released too fast from it and allowing to warn people nearby to evacuate.

## Claims

1. Energy storage container (1) in which at least one energy storage device (8) is arranged, including:
- at least one housing wall (2) and one upper covering (3), wherein the upper covering (3) includes at least one roof flap (4), wherein the housing wall (2) and the upper covering (3) are reinforced to withstand an explosion pressure (P_{E}) inside the energy storage container (1),
- wherein the roof flap (4) is lockable with a lock (5) and the lock (5) is arranged at an upper end of the housing wall (2),
- wherein the lock (5) is configured to partially break and release the roof flap (4) when a predetermined pressure (P₁) inside the energy storage container (1) is reached or exceeded, wherein the predetermined pressure (P₁) is lower than the explosion pressure (P_{E}),
- a sensing system (6) configured to measure at least one parameter (S) related to a technical failure in the container (1), and
- a control unit (7) configured to receive a parameter value (V) measured by the sensing system (6),
- wherein the control unit (7) is further configured to compare the measured value (V) with a predetermined value (V_{P}) and to unlock the lock (5).

2. Energy storage container (1) according to claim 1, wherein the roof flap (4) includes a roof pin (9) configured to hold the roof flap (4) in a closed position when hacking in the lock (5).

3. Energy storage container (1) according to claim 2, wherein the lock (5) includes a lock housing (12) and a locking element (10) configured to be overcome by the roof pin (9) when a predetermined pressure (P₁) inside the container (1) is reached or exceeded.

4. Energy storage container (1) according to any one of claims 1 to 3, wherein the lock (5) includes a wire (14) and is configured to receive via the wire (14) a release signal (14) from the control unit (7) to release the locking element (10).

5. Energy storage container (1) according to any one of claims 1 to 4, including a spring (19) to preload the roof flap (4) outwards of the container (1), wherein the spring (19) is arranged at the upper end of the housing wall (2) and includes a slider (21) attached to the housing wall (2) and a heat resistant compression spring element (20) arranged between the slider (21) and the roof flap (4).

6. Energy storage container (1) according to any one of claims 1 to 5, including a second roof flap (17) configured to be locked by a second lock (18), wherein the second lock (18) is configured to be unlocked by the control unit (7) via the release signal (14) or configured to partially break and release the second roof flap (17) when a predetermined pressure (P₁) inside the container (1) is reached or exceeded,.

7. Energy storage container (1) according to any one of claims 1 to 6, wherein the lock (5) or the locks (5, 17) are attached at an outer surface of the container (1).

8. Energy storage container (1) according to any one of claims 1 to 7, wherein the sensor system (6) includes a detector (16), a second detector (29) and third detector (30) connected to the control unit (7), wherein the control unit (7) is configured to compare the value (V₁) measured by the detector (16) with a threshold value (V_{P1}), the value (V₂) measured by the second detector (29) with a second threshold value (V_{P2}) and the value (V₃) measured by the third detector (30) with a third threshold value (V_{P3}).

9. Energy storage container (1) according to any one of claims 1 to 8, wherein the energy storage device (8) is configured to generate a device output (26) in form of electric power (25), wherein the container (1) is configured to provide the electric power (25) via an electrical container interface (27).

10. Energy storage container (1) according to claim 9, wherein the control unit (7) is configured to stop the operation of the container (1) by sending a disabling signal (28) to the electrical container interface (27) when at least one of the threshold values (V_{P1,} V_{P2,} V_{P3}) is exceeded by the detector values (V_{1,} V_{2,} V₃).

11. Energy storage container (1) according to any one of claims 1 to 10, including a fire suppression device (31) configured to dispense a substance for avoiding fire.

12. Energy storage container (1) according to claim 11, wherein the control unit (7) is configured to start the operation of the fire suppression device (31) by generating an activation signal (32) when at least two of the threshold values (V_{P1}, V_{P2}, V_{P3}) are exceeded by the corresponding detector values (V₁, V₂, V₃).

13. Energy storage container (1) according to claim 8, wherein the control unit (7) includes a timer (33) and is configured to send the release signal (14) to the locks (5, 17) with a time delay and when all detector values (V₁, V₂, V₃) are below their corresponding threshold values (V_{P1}, V_{P2}, V_{P3}), wherein the time delay is programmable using the timer (33).
